Europäisches Patentamt

European Patent Office

Office européen des brevets

(11) Publication number: **0 241 244**
A2

# (12) EUROPEAN PATENT APPLICATION

(21) Application number: **87302950.8**

(22) Date of filing: **03.04.87**

(51) Int. Cl.⁴: **B 23 K 37/00**
**B 23 K 9/28, H 05 H 1/28**

(30) Priority: **04.04.86 GB 8608342**

(43) Date of publication of application:
**14.10.87 Bulletin 87/42**

(84) Designated Contracting States:
**AT BE CH DE ES FR GR IT LI LU NL SE**

(71) Applicant: **HARWORTH ENGINEERING & METALS
LIMITED
Blyth Road
Harworth Doncaster DNII 8LA (GB)**

(72) Inventor: **Musker, Robert William
87 Bawtry Road
Harworth Doncaster, DN11 8NE (GB)**

(74) Representative: **Jones, Graham H.
Graham Jones & Company 77 Beaconsfield Road
Blackheath
London SE3 7LG (GB)**

(54) Water cooled apparatus for welding or cutting.

(57) Water cooled apparatus (2) for welding or cutting, which
water cooled apparatus (2) comprises at least first and second
passageway arrangements (4,8) for receiving cooling water,
whereby in use of the water cooled apparatus, the cooling water
is able to travel simultaneously along the first and the second
passageway arrangements (4,8).

Fig. 1.

**Description**

## WATER COOLED APPARATUS FOR WELDING OR CUTTING

This invention relates to water cooled apparatus for welding or cutting.

Water cooled apparatus for welding or cutting is known. The known welding or cutting apparatus may be in the form of welding or cutting guns or torches. In the known apparatus, there is only a single passageway arrangement, consisting of a series of drilled or milled holes or grooves, for enabling cooling water to pass to and from the apparatus. In the case of water cooled plasma cutting apparatus, the single passageway arrangement is also employed to provide the water for injection purposes for restricting the cutting flame as may be desired. Because of the length and route of the single passageway arrangement in the known water cooled apparatus, heat can be picked up by the water early in the flow of the water, consequently increasing the water temperature and proportionally decreasing the cooling effect of that water thereafter. The cooling water may therefore not have a sufficient cooling effect and parts of the water cooled apparatus may overheat, causing failure of the apparatus.

It is an aim of the present invention to obviate or reduce the above mentioned problem.

Accordingly, this invention provides water cooled apparatus for welding or cutting, which water cooled apparatus comprises at least first and second passageway arrangements for receiving cooling water, whereby in use of the water cooled apparatus, the cooling water is able to travel simultaneously along the first and the second passageway arrangements.

The simultaneous travel of the cooling water along the first and the second passageway arrangements reduces the detrimental effect of the cooling water picking up heat heat early in its flow, as compared with the use of only a single passageway arrangement for the cooling water. The use of the first and the second passageways means that the passageways need not travel for the same length as a single passageway. The passageways can be appreciably shorter and they need not be as tortuous in route as a single passageway.

The water cooled apparatus of the present invention may be one in which the first passageway arrangement is provided by the outer peripheral shape of an inner tube, and in which the second passageway arrangement is provided by the outer peripheral shape of an outer tube.

The inner tube and the outer tube may be separated by an insulating tube.

The outer peripheral shape of the inner tube may include a plurality of longitudinally extending grooves, the longitudinally extending grooves forming the first passageway arrangement, and the longitudinally extending grooves being connected at one end by a header device such that the cooling water passes in one direction along some of the grooves such that the grooves become flow passageways, and in the return direction through the other grooves such that the grooves become return passageways. In an alternative and somewhat simpler arrangement, the outer peripheral shape of the inner tube may include a pair of flats which allow the formation of the first passageway arrangement such that there is one flow passageway and one return passageway.

The water cooled apparatus may include an inlet tube communicating with the flow passageways or the flow passageway, and an outlet tube communicating with the return passageways or the return passageway.

The outer peripheral shape of the outer tube may include a plurality of longitudinally extending grooves, the longitudinally extending grooves forming the second passageway arrangement and the longitudinally extending grooves being connected at one end by a header device such that the cooling water passes in one direction along some of the grooves such that the grooves become flow passageways, and in the return direction to the other grooves such that the grooves become return passageways. In an alternative and somewhat simpler arrangement, the outer periperhal shape of the outer tube may include a pair of flats which allow the formation of the second passageway arrangement such that there is one flow passageway and one return passageway.

The water cooled apparatus may include an inlet tube communicating with the flow passageways or the flow passageway in the second passageway arrangement, and an outlet tube communicating with the return passageways or the return passageway in the second passageway arrangement.

The outer peripheral shape of the inner and outer tubes may be provided by drilling or milling. Alternatively, the tubes may be extruded to the required shape.

The inlet tube for the second passageway arrangement may communicate with the inlet tube for the first passageway arrangement, and the outlet tube for the second passageway arrangement may communicate with the outlet tube for the first passageway arrangement. Thus the water cooled apparatus of the invention only needs to have one main inlet tube and one main outlet tube.

The water cooled apparatus may include a front assembly part, a rear assembly part, and an insulating ring separating the front and the rear assembly parts, the first passageway arrangement being part of the front assembly part, and the second passageway arrangement being such that it extends through the front and the rear assembly parts and the insulating ring.

The first passageway arrangement may be for leading the cooling water to a consumeable nozzle part of the water cooled apparatus, and the second passageway arrangement may be for leading the cooling water to a consumeable tip or a consumeable electrode part of the water cooled apparatus.

The water cooled apparatus may include more than the first and the second passageway arrangements for receiving the cooling water. Thus, for example, the water cooled apparatus may include third or fourth passageway arrangements for receiving cooling water.

The water cooled apparatus may be metal/inert/gas (Mig) welding apparatus, tungsten/inert/gas (Tig) welding apparatus, or plasma welding apparatus. The cutting apparatus may be plasma cutting apparatus. With the Mig and Tig welding apparatus, the apparatus may be manually operated, machine operated or robot operated. With the plasma or cutting apparatus, the apparatus may similarly be manually operated, machine operated or robot operated, and the apparatus may use either gas or compressed air.

Embodiments of the invention will now be described solely by way of example and with reference to the accompanying drawings in which:

Figure I shows in exploded view the inside of first water cooled apparatus for welding or cutting;

Figure 2 illustrates schematically a header arrangement for use in the water cooled apparatus shown in Figure I;

Figure 3 further illustrates schematically the operation of the header arrangement shown in Figure 2;

Figure 4 is a cross section through part of second water cooled apparatus for welding or cutting; and

Figure 5 is a view, partly in longitudinal section, of an adaptor and tip for use in water cooled apparatus of the type shown in Figures I to 3 or 4.

Referring to Figures I to 3, there is shown water cooled apparatus 2 for welding or cutting. The water cooled apparatus 2 comprises a first passageway arrangement 4 which is provided in an inner conductor tube 6 and which is for receiving cooling water, and a second passageway arrangement 8 which is provided in an outer conductor tube I0 and which is also for receiving cooling water. The water cooled apparatus 2 is such that in use, the cooling water is able to travel simultaneously along the first and the second passageway arrangements 4,8.

The outer tube I0 slides over the end of the inner tube 6 and it is separated from the inner tube 6 by an insulating tube I2. In Figure I, only a part of the insulating tube I2 has been shown but it is to be appreciated that the insulating tube I2 extends along the entire length of the inner tube 6.

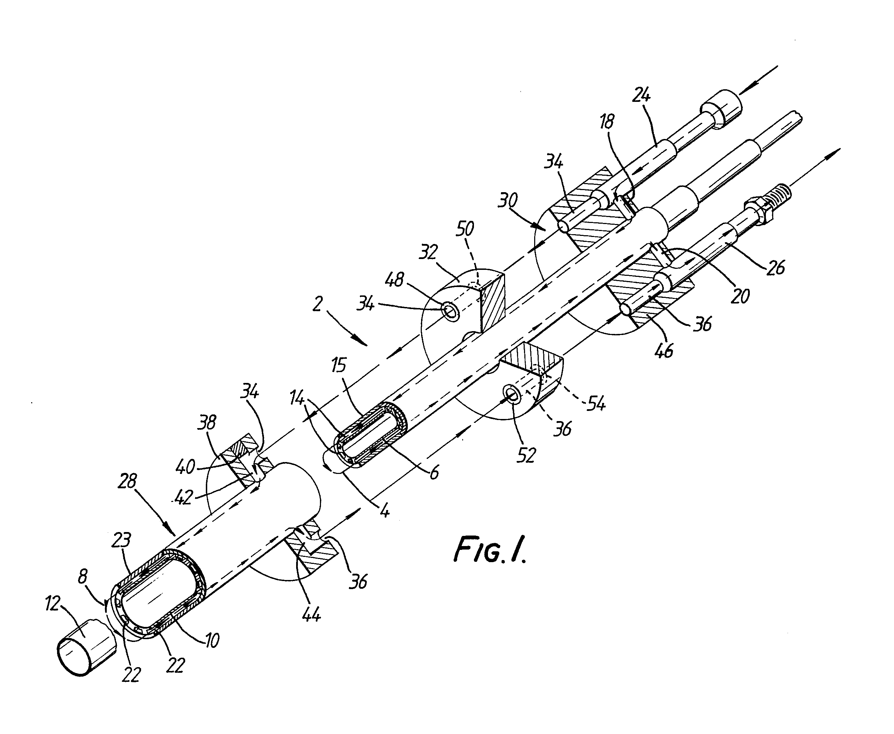

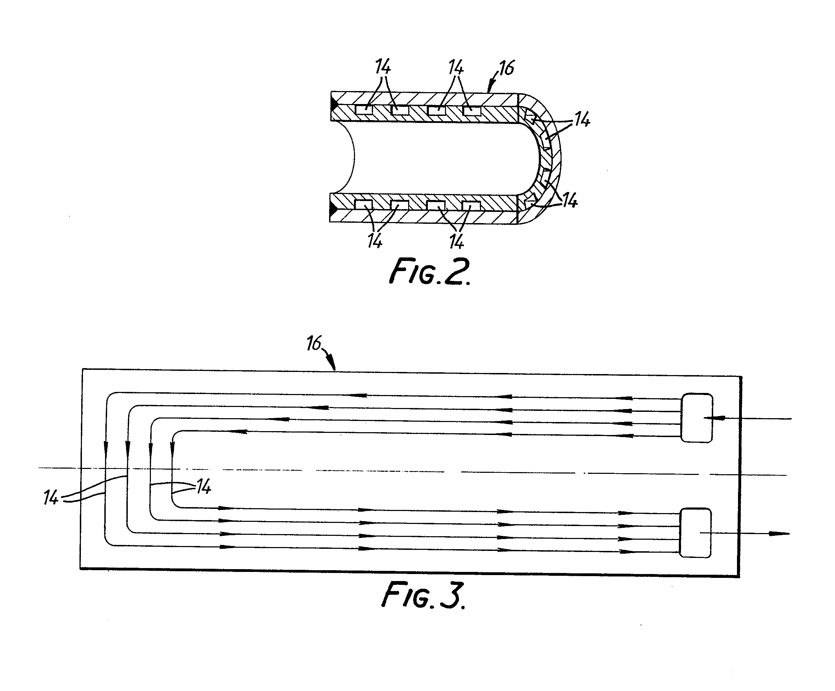

The first passageway arrangement 4 comprises a series of longitudinally extending milled or drilled grooves I4 which are provided in the outer periphery of the inner tube 6 and which are closed by a tube I5. The grooves I4 are connected at one end by a header device I6 as illustrated schematically in Figures 2 and 3. The header device I6 connects the grooves I4 such that cooling water passes in one direction along some of the grooves I4 such that the grooves I4 become flow passageways, and in the return direction through the other grooves I4 such that the grooves I4 become return passageways. Generally, it is arranged that the grooves I4 are so connected

that a flow groove I4 is connected to its return groove I4 such that the return groove I4 is I80° opposite the flow groove I4.

The water cooled apparatus 2 is provided with an inlet tube I8 communicating with the flow grooves I4, and the water cooled apparatus 2 is also provided with an outlet tube 20 communicating with the return grooves I4.

The second passageway arrangement comprises a plurality of longitudinally extending grooves 22 which are provided in the outer periphery of the outer tube I0 and which are closed by a tube 23. The grooves 22 are connected by a header device which is the same as the header device I6 shown in Figures 2 and 3 with the exception that the grooves 22 are substituted for the grooves I4.

The water cooled apparatus 2 includes an inlet tube 24 communicating with the flow grooves 22, and the water cooled apparatus 2 also includes an outlet tube 26 communicating with the return grooves 22. As can be seen from Figure I, the inlet tube 24 for the second passageway arrangement 8 communicates with the inlet tube I8 for the first passageway arrangement 4. Similarly, the outlet tube for the second passageway arrangement 8 communicates with the outlet tube 20 for the first passageway arrangement 4. Thus the water cooled apparatus 2 effectively only has one main inlet tube and one main outlet tube.

The water cooled apparatus 2 includes a front assembly part 28, a rear assembly part 30 and an insulating ring 32 which separates the front assembly part 28 from the rear assembly part 30 when the front assembly part 28 is pushed over the inner tube 6 towards the rear assembly part 30. It will be seen that the second passageway arrangement 8 is such that it extends through the front and the rear assembly parts 28,30 respectively and through the insulating ring 32. More specifically, it will be seen that the grooves 22 in the second passageway arrangement 8 extend only in the outer tube I0, the second passageway arrangement 8 including an inlet bore 34 leading to the grooves 22 through the rear assembly part 30, the insulating ring 32 and the front assembly part 28. The second passageway arrangement 8 also includes an outlet bore 36 leading from the grooves 22 through the front assembly part 28, the insulating ring 32 and the rear assembly part 30.

The front assembly part 28 includes a flange 38 which is provided with a cross drilled hole 40 for enabling the parts 42 of the inlet bore 34 to be formed by drilling. The hole 40 is subsequently plugged for use of the water cooled apparatus 2. The part 44 of the outlet bore 36 can be formed using the hole 40 or another hole (not shown).

The rear assembly part 30 is also provided with a flange 46. The insulating ring 32 is sandwiched between the two flanges 38 and 46. Preferably two O-rings 48,50 are employed as shown on either face of the insulating ring 32 and around the inlet bore 34. Similarly two O-rings 52,54 are employed on either face of the insulating ring 32 around the outlet bore 36. As the insulating ring 32 becomes sandwiched between the flanges 38,46 (as these two flanges 38,46 are tightened together by means of screws not shown) then there may be a tendency for the O-rings 48,50,52,54 to collapse into the inlet and outlet bore 34,36. In order to prevent this, miniature tubes (not shown) may be positioned inside the O-rings 48,50,52,54.

It will be seen from the first and second passageway arrangements 4,8 shown in Figure I that the routes for the cooling water are not as long or as torturous as they would otherwise be if only one passageway arrangement were to be employed. The first passageway arrangement 4 may be for leading the cooling water to a consumeable nozzle part of the water cooled apparatus 2, whilst the second passageway arrangement 8 may be for leading the cooling water to a consumeable tip or a consumeable electrode part of the water cooled apparatus 2. The use of the electrically insulating tube I2 may provide electrical and heat insulation.

The use of the first and the second passageway arrangement 4,8 enables good cooling of the water cooled apparatus 2 so that there is a considerably reduced tendency for power cable overheating as often occurs in known welding and cutting apparatus with consequent burning out of the power cable, melting plastics and water leaks. With the known apparatus, tungsten electrodes often drop out, rubber O-ring seals melt and plastics coverings over copper cabling also melt. With water leaks developing, the chances of an electrical short circuit happening are obviously increased. Because improved water cooling is achieved, the water cooled apparatus of the invention can be used for longer periods of time than known comparably sized water cooled apparatus. With manual operation of the water cooled apparatus, this may not be too important as the water cooled apparatus is allowed to cool as the operator is required to take rest periods. However, for robot operation where the robots do not require rest periods, the longer use of the water cooled apparatus of the present invention has considerable importance because seize ups that would normally occur due to overheating are avoided or considerably reduced in their frequency of occurrance. The water cooled apparatus of the present invention is also able to run generally at a cooler level than known comparable apparatus.

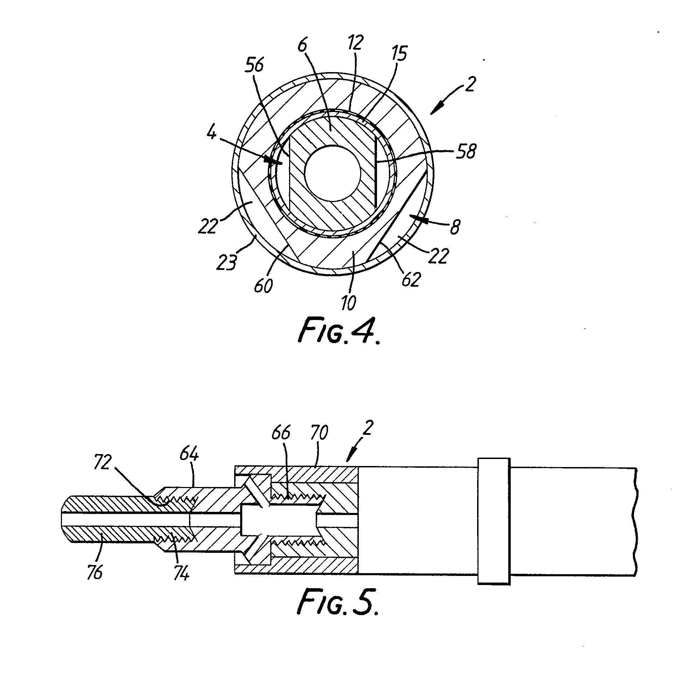

Referring now to Figure 4, similar parts as in Figures I to 3 have been given the same reference numerals and their precise construction and operation will not again be given. In Figure 4, the inner tube 6 is shown provided with two longitudinally extending flats 56,58. These flats enable the formation of the illustrated two first passageway arrangements 4, with cooling water being able to flow along one passageway and back through the other passageway. Similarly, the outer tube I0 is provided with a pair of flats 60,62 which enable the formation of the illustrated two second passageway arrangements 8. These second passageway arrangements 8 allow cooling water to pass along one passageway 8 and back through the outer passageway 8.

Referring now to Figure 5, it will be seen that modified water cooled apparatus 2 is shown. The modified water cooled apparatus 2 has an adaptor 64 having a screw threaded end 66. This end 66 screws into a screw threaded recess 68 formed in the illustrated end of an insulating tube 70. The other end of the adaptor 64 is provided with a screw threaded recess 72 which receives the screw threaded end 74 of a tip device 76. If desired, the tip device 76 could in a further alternative construction be arranged to fit directly into the recess 68 so that the adaptor 64 could then be dispensed with.

The apparatus 2 may be made of various desired and suitable materials. Thus, for example, the insulating means 32 may be made of a nylon or acetyl material. Helicoil insulators are preferably provided where non-metallic parts are to be provided with screw bolts. The water cooled apparatus 2 may be constructed to have two separate water jackets which are pressure tested for assembly. The insulating tube I2 may be made of fibre glass known as Jones Stroud fibre glass.

It is to be appreciated that the embodiments of the invention described above with reference to the accompanying drawings have been given by way of example only and that modifications may be effected. Thus, for example, the number of grooves I4,22 shown in Figure I can be varied as may be desired, although it is presently preferred to have three or four grooves I4 and three or four grooves 22. Also, it will be seen that the inlet tube 24 commences with a female fitting 56 whilst the outlet tube 26 terminates in a male fitting 58 but this arrangement may be reversed if desired. The water cooled apparatus 2 may be in the form of Mig or Tig welding apparatus, plasma welding apparatus or plasma cutting apparatus. The apparatus may be manually operated apparatus, machine operated apparatus or apparatus operated by robots. The plasma welding and cutting apparatus may use either gas or compressed air. The insulating tube I2 may be made from polytetrafluoroethylene but it may be made of other materials if desired.

The water cooled apparatus can be straight as shown or it can be bent. Water cooled apparatus having a bent neck may be required for ease of operating in confined spaces or where robots operating with a limited degree of movement are employed. Where bent water cooled apparatus is required, the bending will usually be the last major manufacturing step in the manufacture of the water cooled apparatus. The bending will not cause crushing of the water ways, as sometimes occurs with known types of water cooled apparatus.

It is envisaged that the water cooled apparatus 2 may be sold under the trade mark SUPER COOL.

## Claims

1. Water cooled apparatus for welding or cutting, which water cooled apparatus comprises at least first and second passageway arrangements for receiving cooling water, whereby in use of the water cooled apparatus, the cooling water is able to travel simultaneously along the first and the second passageway arrangements.

2. Water cooled apparatus according to claim I in which the first passageway arrangement is provided by the outer peripheral shape of an inner tube, and in which the second passageway arrangement is provided by the outer peripheral shape of an outer tube.

3. Water cooled apparatus according to claim 2 in which the inner tube and the outer tube are separated by an insulating tube.

4. Water cooled apparatus according to claim 2 or claim 3 in which the outer peripheral shape of the inner tube includes a plurality of longitudinally extending grooves, the longitudinally extending grooves forming the first passageway arrangement, and the longitudinally extending grooves being connected at one end by a header device such that the cooling water passes in one direction along some of the grooves such that the grooves become flow passageways, and in the return direction through the other grooves such that the grooves become return passageways.

5. Water cooled apparatus according to claim 2 or claim 3 in which the outer peripheral shape of the inner tube includes a pair of flats which allow the formation of the first passageway arrangement such that there is one flow passageway and one return passageway.

6. Water cooled apparatus according to any one of claims I to 4 in which the outer peripheral shape of the outer tube includes a plurality of longitudinally extending grooves, the longitudinally extending grooves forming the second passageway arrangement, and the longitudinally extending grooves being connected at one end by a header device such that the cooling water passes in one direction along some of the grooves such that the grooves become flow passageways, and in the return direction through the other grooves such that the grooves become return passageways.

7. Water cooled apparatus according to any one of claims 2,3 or 5 in which the outer peripheral shape of the outer tube includes a pair of flats which allow the formation of the second passageway arrangement such that there is one flow passageway and one return passageway.

8. Water cooled apparatus according to any one of the preceding claims and including a front assembly part, a rear assembly part, and an insulating ring separating the front and the rear assembly parts, the first passageway arrangement being part of the front assembly part, and the second passageway arrangement being such that it extends through the front and the rear assembly parts and the insulating ring.

9. Water cooled apparatus according to any one of preceding claims in which the first passageway arrangement is for leading the cooling water to a consumeable nozzle part of the water cooled apparatus, and the second passageway arrangement is for leading the cooling water to a consumeable tip or a consumeable electrode part of the water cooled apparatus.

10. Water cooled apparatus according to any one of the preceding claims and which is metal/inert/gas welding apparatus, tungsten/inert/gas welding apparatus, or plasma welding apparatus.

0241244

Fig. I.

FIG.2.

FIG.3.

FIG.4.

FIG.5.